# EUROPEAN PATENT APPLICATION

(11) **EP 4 838 930 A1**
(43) Date of publication of application: **11.11.2026**
(21) Application number: 24914544.2
(22) Date of filing: 02.01.2024
(51) Int. Cl.: H04W 24/02, H04W 24/08

(54) **COMMUNICATION METHOD, ACCESS POINT AND STATION**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2024/070238
(87) International publication number: WO 2025/145307

(57) **Abstract**

The embodiments of the present disclosure relate to a communication method, a station, and an access point. The communication method comprises: when basic service set (BSS) parameters of a BSS where an access point (AP) is located change, the AP determining a first radio frame, wherein the first radio frame identifies that the AP terminates an SBP process or terminates a TB sensing measurement process, and the first radio frame comprises a measurement session ID of a terminated measurement session; and sending the first radio frame to an unassociated-station (U-STA). When the BSS parameters change, in order to prevent the U-STA from failing to update the BSS parameters in a timely manner, the access point directly sends the first radio frame to terminate the SBP process (or terminate the TB sensing measurement process), and upon receiving the first radio frame, the U-STA terminates the participation in the SBP process and the TB sensing measurement process.

## Description

### TECHNICAL FIELD

The disclosure relates to the field of communication technologies, and more particularly to a communication method, an access point (AP), and a station (STA).

### BACKGROUND

In the Wi-Fi technologies currently studied, a wireless local area network (WLAN) sensing technology may be supported, such as, an application scenario such as location discovery in a dense environment (such as home environment and enterprise environment), proximity detection and presence detection. In the process of WLAN Sensing, roles of a station (STA) and an access point (AP) are generally interchangeable. For example, both of the STA and the AP may be used as sensing initiators or sensing transmitters. As the sensing initiator or the sensing transmitter, the AP may communicate with multiple STAs at the same time. However, the STAs do not have such multi-device communication, but may only perform one-to-one communication with a single sensing responder. On the one hand, it is caused that spectrum resources are wasted, on the other hand, it is caused that a delay is increased, which may not meet a delay requirement for a communication scenario with a high delay requirement.

In order to solve such problem, a solution where the AP performs WLAN sensing measurement on behalf of the STA is proposed, that is, sensing by proxy (SBP) measurement. During the SBP measurement, parameters of the AP may change. Therefore, there needs to provide a way for update SBP parameters.

### SUMMARY

Embodiments of the disclosure provide a communication method, an access point (AP), and a station (STA), to provide a way for updating sensing by proxy (SBP) parameters.

In a first aspect, embodiments of the disclosure provide a communication method, including:
determining a first frame by an AP in a case that basic service set (BSS) parameters of a BSS where the AP is located change; the first frame identifying that the AP terminates an SBP procedure or terminates a triggered based sounding (TB) sensing measurement procedure, and the first frame including a measurement session identification (ID) of a measurement session terminated; and
sending the first frame to an unassociated station (U-STA).

In another aspect, embodiments of the disclosure also provide a communication method, including:
receiving a first frame by an STA,
in which the first frame identifying that BSS parameters of a BSS where an AP is located change and the AP terminates an SBP procedure or terminates a TB sensing measurement procedure; the first frame includes a measurement session ID of a measurement session terminated; and
the STA is a U-STA of the AP, and the U-STA participates in a TB sensing measurement.

In another aspect, embodiments of the disclosure also provide an AP, including:
a determining module, configured to determine a first frame in a case that BSS parameters of a BSS where the AP is located change; the first frame identifying that the AP terminates an SBP procedure or terminates a TB sensing measurement procedure, and the first frame including a measurement session ID of a measurement session terminated; and
a sending module, configured to send the first frame to a U-STA.

In another aspect, embodiments of the disclosure also provide an STA, including:
a first receiving module, configured to receive a first frame,
in which the first frame identifying that BSS parameters of a BSS where an AP is located change and the AP terminates an SBP procedure or terminates a TB sensing measurement procedure; the first frame includes a measurement session ID of a measurement session terminated; and
the STA is a U-STA of the AP, and the U-STA participates in a TB sensing measurement.

In another aspect, embodiments of the disclosure also provide an AP, including:
one or more processors.

The AP is configured to perform the communication method in embodiments of the disclosure.

In another aspect, embodiments of the disclosure also provide an STA, including:
one or more processors.

The STA is configured to perform the communication method in embodiments of the disclosure.

Embodiments of the disclosure also provide a communication system, including an AP and an STA, in which the AP is configured to implement the communication method in embodiments of the disclosure, and the STA is configured to implement the communication method in embodiments of the disclosure.

Embodiments of the disclosure also provide a storage medium for storing instructions. When the instructions are run on a communication device, the communication device is caused to perform the communication method in embodiments of the disclosure.

In the embodiments of the disclosure, the AP determines the first frame in a case that the BSS parameters change, and the first frame identifies that the AP terminates the SBP procedure (or terminates the TB sensing measurement procedure). When the BSS parameters change, in order to avoid that the U-STA may not update the BSS parameters in time, the AP directly sends the first frame to terminate the SBP procedure (or terminate the TB sensing measurement procedure), and the U-STA terminates participating in the SBP procedure and the TB sensing measurement procedure after receiving the first frame.

Additional aspects and advantages of the embodiments of the disclosure will be set forth in part in the description below, which will become apparent from the description or be learned through the practice of the disclosure.

### BRIEF DESCRIPTION OF THE DRAWINGS

To more clearly illustrate the technical solution in embodiments of the disclosure, description is made below to accompanying drawings used for embodiments. The accompanying drawings below are only some embodiments of the disclosure, and do not impose detailed limitations on the protection scope of the disclosure.
FIG. 1 is an exemplary schematic diagram illustrating an architecture of a communication system according to an embodiment of the disclosure.
FIG. 2 is a first schematic diagram illustrating an exemplary interaction according to an embodiment of the disclosure.
FIG. 3 is a second schematic diagram illustrating an exemplary interaction according to an embodiment of the disclosure.
FIG. 4 is a first flow chart illustrating a communication method according to an embodiment of the disclosure.
FIG. 5 is a second flow chart illustrating a communication method according to an embodiment of the disclosure.
FIG. 6 is a block diagram illustrating an access point (AP) according to an embodiment of the disclosure.
FIG. 7 is a block diagram illustrating a station (STA) according to an embodiment of the disclosure.
FIG. 8 is a block diagram illustrating a terminal according to an embodiment of the disclosure.
FIG. 9 is a block diagram illustrating a chip according to an embodiment of the disclosure.

### DETAILED DESCRIPTION

Embodiments of the disclosure provide a communication method, an access point (AP), and a station (STA).

In a first aspect, embodiments of the disclosure provide a communication method, including:
determining a first frame by an AP in a case that basic service set (BSS) parameters of a BSS where the AP is located change; the first frame identifying that the AP terminates a sensing by proxy (SBP) procedure or terminates a triggered based sounding (TB) sensing measurement procedure, and the first frame including a measurement session identification (ID) of a measurement session terminated; and
sending the first frame to an unassociated station (U-STA).

In the above embodiments, the AP determines the first frame in a case that the BSS parameters change, and the first frame identifies that the AP terminates the SBP procedure (or terminates the TB sensing measurement procedure). In a case that the BSS parameters change, in order to prevent the U-STA from updating the BSS parameters in time, the AP directly sends the first frame to terminate the SBP procedure (or terminate the TB sensing measurement procedure), and the U-STA stops participating in the SBP procedure and the TB sensing measurement procedure after receiving the first frame.

In combination with some embodiments of the first aspect, in some embodiments, sending the first frame to the U-STA includes:
sending the first frame to the U-STA within an availability window pre-negotiated with an SBP initiator.

In the above embodiments, the first frame is sent within the pre-negotiated availability window, such that the U-STA may update the BSS parameters timely.

In combination with some embodiments of the first aspect, in some embodiments, before determining the first frame, the communication method includes:
receiving an SBP request frame sent by the U-STA in establishing the SBP procedure with the U-STA, in which the SBP request frame identifies that the U-STA participates in a TB sensing measurement, and the SBP request frame includes availability window information.

In the above embodiments, in establishing the SBP procedure by the AP with the U-STA, the SBP request frame indicates that the U-STA participates in the TB sensing measurement, and availability window information is negotiated.

In combination with some embodiments of the first aspect, in some embodiments, the first frame includes an SBP termination frame or a sensing measurement termination frame.

In the above embodiments, the SBP termination frame or the sensing measurement termination frame is used to instruct the U-STA to stop participating in the SBP procedure and the TB sensing measurement procedure.

In combination with some embodiments of the first aspect, in some embodiments, the first frame includes the sensing measurement termination frame, and the AP does not send a sensing measurement result of the measurement session after sending the first frame to the U-STA within the availability window.

In the above embodiments, in a case that the SBP initiator receives the sensing measurement termination frame within the availability window and does not receive an SBP report fed back by an SBP responder (AP) before the BSS parameters are changed, the SBP initiator already terminates the TB sensing measurement procedure. Since the AP fails to report the current SBP report, a current SBP is incomplete, and the SBP responder does not need to send the sensing measurement result for the measurement session.

In combination with some embodiments of the first aspect, in some embodiments, the first frame includes the SBP termination frame, and the AP sends a sensing measurement result of the measurement session to the SBP initiator before sending the first frame to the U-STA within the availability window.

In the above embodiments, in a case that the SBP initiator (U-STA) receives the SBP termination frame in the availability window, the SBP responder(AP) needs to forward an SBP report frame before the BSS parameter changes to the SBP initiator, such that that the U-STA may obtain the SBP measurement result before terminating the SBP procedure or terminating the TB sensing measurement procedure.

In combination with some embodiments of the first aspect, in some embodiments, the first frame includes second identification information, and a reason for the second identification information identifying that the AP terminates the SBP procedure or the TB sensing measurement procedure includes: whether the parameters of the BSS where the AP is located change.

In the above embodiments, the termination reason is carried in the first frame.

In combination with some embodiments of the first aspect, in some embodiments, the first frame includes the SBP termination frame, and the second identification information is carried in an SBP termination control field of the SBP termination frame;
or
the first frame includes the sensing measurement termination frame, and the second identification information is carried in a measurement session termination control field of the sensing measurement termination frame.

In the above embodiments, the SBP termination frame and the sensing measurement termination frame may carry the termination reason, such that the SBP initiator monitors a beacon frame re-broadcast by the AP (SBP responder).

In a second aspect, embodiments of the disclosure provide a communication method, including:
receiving a first frame.

The first frame identifying that BSS parameters of a BSS where an AP is located change and the AP terminates an SBP procedure or terminates a TB sensing measurement procedure; the first frame includes a measurement session ID of a measurement session terminated; and
the STA is a U-STA of the AP, and the U-STA participates in a TB sensing measurement.

In combination with some embodiments of the second aspect, in some embodiments, receiving the first frame by the STA includes: receiving, by the STA, the first frame within an availability window pre-negotiated with an SBP initiator.

In combination with some embodiments of the second aspect, in some embodiments, the first frame incudes an SBP termination frame or a sensing measurement termination frame.

In combination with some embodiments of the second aspect, in some embodiments, before receiving the first frame, the communication method includes:
sending an SBP request frame to the AP in establishing the SBP procedure with the AP, in which the SBP request frame identifies that the U-STA participates in the TB sensing measurement, and the SBP request frame includes availability window information.

In combination with some embodiments of the second aspect, in some embodiments, the first frame includes the sensing measurement termination frame, and the AP does not send a sensing measurement result of the measurement session after sending the first frame to the U-STA within the availability window.

In combination with some embodiments of the second aspect, in some embodiments, the first frame includes the SBP termination frame, and the STA receives a sensing measurement result of the measurement session from the AP before receiving the first frame within the availability window pre-negotiated with the SBP initiator.

In combination with some embodiments of the second aspect, in some embodiments, the first frame includes second identification information, and a reason for the second identification information identifying that the AP terminates the SBP procedure or the TB sensing measurement procedure includes whether the parameters of the BSS where the AP is located change.

In combination with some embodiments of the second aspect, in some embodiments, the first frame includes the SBP termination frame, and the second identification information is carried in an SBP termination control field of the SBP termination frame;
or
the first frame includes the sensing measurement termination frame, and the second identification information is carried in a measurement session termination control field of the sensing measurement termination frame.

In a third aspect, embodiments of the disclosure provide an AP. The AP includes at least one of a determining module or a sending module. The AP is configured to perform alternative implementations of the first aspect.

In a fourth aspect, embodiments of the disclosure provide a STA. The STA includes a first receiving module. The STA is configured to perform alternative implementations of the second aspect.

In a fifth aspect, embodiments of the disclosure also provide an AP, including:
one or more processors.

The AP is configured to perform alternative implementations of the first aspect.

In a sixth aspect, embodiments of the disclosure also provide a STA, including:
one or more processors.

The STA is configured to perform the alternative implementations of the second aspect.

In a seventh aspect, embodiments of the disclosure also provide a communication system, including an AP and an STA, in which the AP is configured to perform alternative implementations of the first aspect, and the STA is configured to perform alternative implementations of the second aspect.

In an eighth aspect, embodiments of the disclosure also provide a storage medium for storing instructions, in which when the instructions are run on a communication device, the communication device is caused to perform alternative implementations of the first aspect and the second aspect.

In a ninth aspect, embodiments of the disclosure provide a program product. When the program product is executed by a communication device, the communication device is caused to perform the methods described in the alternative implementations of the first aspect and the second aspect.

In a tenth aspect, embodiments of the disclosure provide a computer program. When the computer program are run on a computer, the computer is caused to perform the method as described in the alternative implementations of the first aspect and the second aspect.

In an eleventh aspect, embodiments of the disclosure provide a chip or chip system. The chip or chip system includes a processing circuit configured to perform the method described according to the alternative implementations of the first aspect and the second aspect.

It may be understood that all the AP, the STA, the communication system, the storage medium, the program product, the computer program, the chip or the chip system described above are configured to perform the method in embodiments of the disclosure. Therefore, for beneficial effects they may achieve, please refer to the beneficial effects in the corresponding method, which are not repeated here.

Embodiments of the disclosure provide a communication method, an AP and a STA. In some embodiments, terms such as communication method, method for sending a signal, method for sending a frame, etc., may be used interchangeably, and terms such as information processing system, and communication system, etc., may be used interchangeably,

Embodiments of the disclosure are not exhaustive, but are only illustrative, and are not intended to be a detailed limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and an order of steps in a certain embodiment may be arbitrarily exchanged. In addition, alternative implementations in a certain embodiment may be arbitrarily combined. In addition, respective embodiments may be arbitrarily combined, for example, some or all steps of different embodiments may be arbitrarily combined, and a certain embodiment may be arbitrarily combined with alternative implementations of other embodiments.

In various embodiments of the disclosure, unless otherwise specified or there is a logical conflict, the terms and/or descriptions between embodiments are consistent and reference to each other may be made, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, "a plurality of" and "multiple" means two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, please refer to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, there may be one or more a number of "apparatuses". In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining... ", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be used interchangeably, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device may be interpreted as physical or virtual, and their names are not limited to the names recorded in embodiments. In some case, the apparatus and device may also be understood as "equipment", "device", "circuit", "network element", "node", "function", "unit", "section", "system", "network", "chip", "chip system", "entity", and "subject", etc.

In some embodiments, obtaining data, information, etc. shall comply with laws and regulations of a country where it is located.

In some embodiments, data, information, etc. may be obtained after agreed by a user.

In addition, each element, each row, or each column in the table of embodiments of the disclosure may be implemented as an independent embodiment, and a combination of any elements, any rows, or any columns may also be implemented as an independent embodiment.

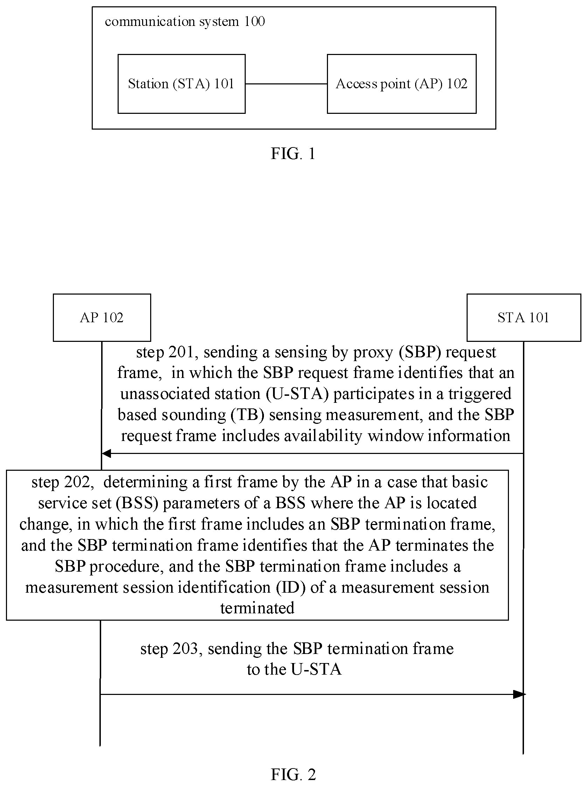

FIG. 1 is a schematic diagram illustrating an architecture of a communication system according to an embodiment of the disclosure.

As illustrated in FIG. 1, the communication system 100 includes a STA 101, and an AP 102.

In some embodiments, the STA 101 includes, such as, a radio communication chip, a wireless sensor, or a radio communication terminal that supports a wireless fidelity (WiFi) communication function. Alternatively, the radio communication terminal may be such as a mobile phone, a wearable device, an Internet of Things device that supports the WiFi communication function, a car with the WiFi communication function, a smart car, and a Pad, a computer with a radio transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In detail, the STA 101 may be a terminal with a wireless fidelity (WiFi) chip or a network device. Alternatively, the STA 101 may support various wireless local area network (WLAN) standards such as 802.11ax, 802.11be, 802.11ac, 802.11n, 802.11g, 802.11b, 802.11a, 802.11bf and 802.11bn, and support the following generation 802.11 protocol, but is not limited to this

In some embodiments, the AP 102 may be an AP for a mobile terminal to enter a wired network. The AP is equivalent to a bridge connecting the wired network and a wireless network. A main function of the AP is to connect all wireless network clients together, and then connect the wireless network to Ethernet. In detail, the AP may be a terminal or a network device with a WiFi chip. Alternatively, the AP may support various WLAN standards such as 802.11ax, 802.11be, 802.11ac, 802.11n, 802.11g, 802.11b, 802.11a, 802.11bf, 802.11bn, and the following generation 802.11 protocol, but is not limited to this.

Alternatively, in embodiments of the disclosure, the AP and the STA may be devices supporting multiple connections, for example, respectively represented as an access point multi-link device (AP MLD) and a non-access point multi-link device (non-APMLD). The AP MLD may represent an AP supporting a multi-connection communication function, and the non-AP MLD may represent a STA supporting the multi-connection communication function.

It may be understood that the communication system described in embodiments of the disclosure is for the purpose of more clearly explaining the technical solution of embodiments of the disclosure, and does not constitute a limitation on the technical solution proposed in embodiments of the disclosure. Those skilled in the art know that the technical solution proposed in embodiments of the disclosure is also applicable to similar technical problems with the evolution of the system architecture and the emergence of a new business scenario.

The following embodiments of the disclosure may be applied to the communication system 100 or some of the subjects illustrated in FIG. 1, but are not limited herein. The subjects illustrated in FIG. 1 are examples, and the communication system may include all or some of the subjects in FIG. 1, or may include other subjects than those illustrated in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to a WLAN, such as, a WLAN employing the 802.11 series protocol. In the WLAN, a basic service set (BSS) is a basic component of the WLAN. A BSS network is combined by STAs with a certain association within a certain coverage area. One situation of association is that the STAs communicate directly with each other in an ad hoc network, called independent basic service set (IBSS). Another more common situation is that there is only one central STA dedicated to managing the BSS in the BSS network, which is called AP, and other STAs in the network are associated with the STA. Other STAs in the BSS network that are not central STAs are called terminals, which are also called non-AP STAs. The terminals and non-AP STAs are collectively called STAs. There is no need to distinguish between the AP and the non-AP STA when the STA is described. In the same BSS network, because of a distance, a transmission power and other reasons, one STA may not detect other STAs far away from the STA, and they are hidden nodes with each other.

FIG. 2 is a first schematic diagram illustrating an exemplary interaction of a communication method according to an embodiment of the disclosure. As illustrated in FIG. 2, the method includes the following.

At step 201, an STA 101 sends an SBP request frame to an AP in establishing an SBP procedure with the AP, in which the SBP request frame identifies that a U-STA participates in a TB sensing measurement, and the SBP request frame includes availability window information.

The STA is a U-STA of the AP.

In establishing the SBP procedure with the AP, the STA (SBP initiator) sends the SBP request frame to the AP, requesting the AP to initiate the TB sensing measurement on its behalf. The SBP request frame identifies that the U-STA participates in the TB sensing measurement, for example, a sensing responder identification bit in an SBP parameter information element of the SBP request frame is set to 1 to identify that the STA participates in the TB sensing measurement, and the TB sensing measurement includes null data packet announcement (NDPA) (downlink) sensing measurement, trigger frame (TF uplink) sensing measurement and the like. An availability window is negotiated with the AP (SBP responder) in the SBP request frame, for the SBP procedure, the TB sensing measurement and a sensing measurement termination procedure, and an SBP report and an SBP termination are reported. The U-STA is in an awake state within the availability window.

At step 202, the AP determines a first frame in a case that BSS parameters of a BSS where the AP is located change, in which the first frame includes an SBP termination frame, and the SBP termination frame identifies that the AP terminates the SBP procedure, and the SBP termination frame includes a measurement session ID of a measurement session terminated.

The STA is the U-STA of the AP, that is, the U-STA does not establish an association with the AP. In the SBP procedure, the BSS parameters of the BSS where AP is located may change, so the AP may not control a behavior of the U-STA. In a case that some parameters of the BSS parameters change, the AP may not be able to control that the U-STA participating in the sensing measurement may update some parameters of the BSS parameters change in time. For example, the U-STA establishes an SBP sensing measurement with the AP after monitoring a beacon frame broadcast by the AP, and some parameters of the BSS may change in establishing the SBP procedure. In a case that the U-STA participates in the TB sensing measurement in the SBP procedure, the U-STA needs to know about the change of these parameters. However, since the U-STA does not establish the association with the AP, the U-STA may not receive changed BSS parameters. For example, if the AP sends updated BSS parameters to an associated STA by an association response frame or a re-association response frame, the U-STA may not receive the updated BSS parameters.

Therefore, in a case that the BSS parameters change, the AP determines the SBP termination frame, the SBP termination frame identifies that the AP terminates the SBP procedure (or terminates the TB sensing measurement procedure), and the SBP termination frame includes the measurement session ID that identifies the measurement session terminated, such as the measurement session in which the U-STA participates. That is, in a case that the BSS parameters change, in order to avoid that the U-STA may not update the BSS parameters in time, the AP directly sends the SBP termination frame to terminate the SBP procedure, and the U-STA terminates participating in the SBP procedure and the TB sensing measurement procedure after receiving the SBP termination frame.

In this way, in a case that the BSS parameters change, the U-STA obtains the SBP termination frame as an SBP initiator and also as a sensing responder, and terminates participating in the SBP procedure (or TB sensing measurement procedure), thus avoiding that after the AP sends the SBP termination frame, the AP also needs to send a sensing measurement termination frame again to terminate the TB sensing measurement procedure in which the U-STA participates, to reduce the signaling waste.

It may be understood that in embodiments of the disclosure, the AP may not send the first frame (SBP termination frame or sensing measurement termination frame) within the availability window, for example, if the AP knows that the U-STA is always awake outside the availability window.

In addition, in embodiments of the disclosure, the first frame includes the SBP termination frame or the sensing measurement termination frame. The measurement session ID in the SBP Termination frame is consistent with the measurement session ID in the sensing measurement termination frame.

For the U-STA, in a case that the BSS parameters change, the U-STA may receive one of the SBP termination frame or the sensing measurement termination frame. In a case that the SBP termination frame is received first, the TB sensing measurement procedure may be automatically terminated. In a case that the sensing measurement termination frame is received first, the SBP procedure may be automatically terminated. The U-STA needs to obtain new change information of the BSS parameters after receiving the beacon frame sent by the AP, and then establish an SBP sensing measurement (possibly including the TB sensing measurement, such as setting the sensing responder bit to) or a non-TB sensing measurement with the AP again.

Alternatively, the BSS parameters of the BSS include at least one of a transmit power envelope (TPE) and a punctured channel. It can be understood that in embodiments of the disclosure, the BSS parameters of the BSS also include other parameters than the TPE and the punctured channel, which are not described here.

At step 203, the first frame is sent to a U-STA.

Alternatively, the AP sends the SBP termination frame to the U-STA within the availability window pre-negotiated with the SBP initiator.

In a case that the U-STA initiates the SBP procedure as the SBP initiator and requests the AP as the SBP responder to initiate the TB sensing measurement procedure, when the BSS parameters change, the U-STA obtains the SBP termination frame as the SBP initiator and also as the SBP responder, and terminates participating in the SBP procedure (or the TB sensing measurement procedure of the SBP procedure), thus avoiding that after the AP sends the SBP termination frame, the AP needs to send the sensing measurement termination frame again to terminate the TB sensing measurement procedure in which the U-STA participates, to reduce the signaling waste.

In some embodiments, the first frame includes the SBP termination frame, the AP sends a sensing measurement result of the measurement session to the SBP initiator before sending the first frame to the U-STA within the availability window.

In a case that the SBP initiator(U-STA) receives the SBP Termination frame in the availability window, the SBP responder(AP) needs to forward the SBP report frame before the BSS parameter changes to the SBP initiator, so that the U-STA can obtain the SBP measurement result before terminating the SBP procedure or terminating the TB sensing measurement procedure.

In some embodiments, the first frame includes second identification information, and a reason for identifying that the AP terminates the SBP procedure or the TB sensing measurement procedure includes whether the parameters of the BSS where the AP is located change.

The SBP termination frame may carry the reason of termination, such that the SBP initiator may monitor the beacon frame rebroadcast by the AP (SBP responder). A format of the SBP termination frame is illustrated in Table 1 below.

**Table 1**

| Information content | Category | Public Action/Protected Dual of Public Action) | Measurement Session ID Indication | BP Termination Control | SBP Parameters element |
|---|---|---|---|---|---|
| Octets | 1 | 1 | 1 | 1 | 0 or variable |

As illustrated in Table 1, the second identification information is carried in a SBP termination control field of the SBP termination frame.

Further, a format of the SBP termination control field is illustrated in Table 2 below.

**Table 2**

| Content | Terminate SBP Procedures | SBP Error Status | Reserved |
|---|---|---|---|
| Bits | 1 | 1 | 6 |

The second identification information may be carried in the reserved field, that is, a bit is newly occupied in the reserved field.

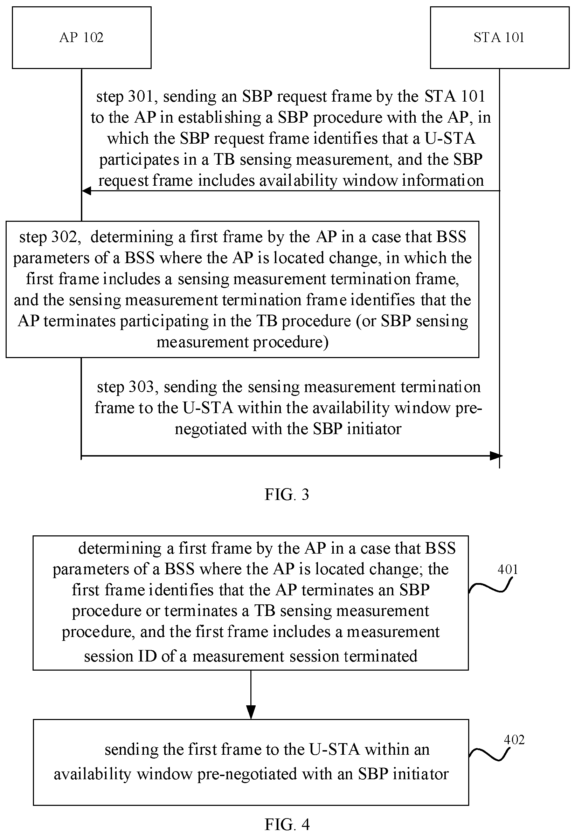

FIG. 3 is a second schematic diagram illustrating an interaction of a communication method according to an embodiment of the disclosure. As illustrated in FIG. 3, the communication method includes the following.

At step 301, an STA 101 sends an SBP request frame to an AP in establishing a SBP procedure with the AP, in which the SBP request frame identifies that a U-STA participates in a TB sensing measurement, and the SBP request frame includes availability window information.

The STA is a U-STA of the AP.

In establishing the SBP procedure with the AP, the STA (SBP initiator) sends the SBP request frame to the AP, requesting the AP to initiate the TB sensing measurement on its behalf. The SBP request frame identifies that the U-STA participates in the TB sensing measurement, for example, a sensing responder identification bit in an SBP parameter information element of the SBP request frame is set to 1 to identify that the STA participates in the TB sensing measurement, and an availability window is negotiated with the AP (SBP responder) in the SBP request frame, for the SBP procedure

At step 302, the AP determines a first frame in a case that BSS parameters of a BSS where the AP is located change, in which the first frame includes a sensing measurement termination frame, and the sensing measurement termination frame identifies that the AP terminates participating in the TB procedure (or SBP sensing measurement procedure), and the sensing measurement termination frame includes a measurement session ID of a measurement session terminated.

The STA is the U-STA of the AP, that is, the U-STA does not establish an association with the AP. In the SBP procedure, the BSS parameters of the BSS where AP is located may change, so the AP may not control a behavior of the U-STA. In a case that some parameters of the BSS parameters change, the AP may not be able to control that the U-STA participating in the sensing measurement may update some parameters of the BSS parameters change in time. For example, the U-STA establishes an SBP sensing measurement with the AP after monitoring a beacon frame broadcast by the AP, and some parameters of the BSS may change in establishing the SBP procedure. In a case that the U-STA participates in the TB sensing measurement in the SBP procedure, the U-STA needs to know about the change of these parameters. However, since the U-STA does not establish the association with the AP, the U-STA may not receive changed BSS parameters. For example, if the AP sends updated BSS parameters to an associated STA by an association response frame or a re-association response frame, the U-STA may not receive the updated BSS parameters.

Therefore, in a case that the BSS parameters change, the AP determines the sensing measurement termination frame, the sensing measurement termination frame identifies that the AP terminates the TB sensing measurement procedure (or terminates the SBP procedure), and the sensing measurement termination frame includes the measurement session ID that identifies the measurement session terminated, such as the measurement session in which the U-STA participates. That is, in a case that the BSS parameters change, in order to avoid that the U-STA may not update the BSS parameters in time, the AP directly sends the sensing measurement termination frame to terminate the TB sensing measurement procedure, and the U-STA terminates the TB sensing measurement procedure (or SBP procedure) after receiving the sensing measurement termination frame.

In this way, in a case that the BSS parameters change, the U-STA obtains an SBP termination frame as an SBP initiator and also as a sensing responder, and terminates participating in the TB sensing measurement procedure (or terminates the SBP procedure), thus avoiding that the AP needs to send the SBP termination frame and the sensing measurement termination frame to terminate the TB sensing measurement procedure in which the U-STA participates, to reduce the signaling waste.

Alternatively, the BSS parameters of the BSS include at least one of a transmit power envelope (TPE) and a punctured channel. It can be understood that in embodiments of the disclosure, the BSS parameters of the BSS also include other parameters than the TPE and the punctured channel, which are not described here.

At step 303, the sensing measurement termination frame is sent to the U-STA within the availability window pre-negotiated with the SBP initiator.

In the case that the U-STA initiates the SBP procedure as the SBP initiator and requests the AP as the SBP responder to initiate the TB sensing measurement procedure, when the BSS parameters change, the U-STA, as the SBP initiator and simultaneously as the sensing responder, obtains the sensing measurement termination frame, and terminates participating in the SBP procedure (or the TB sensing measurement procedure of the SBP procedure), thus avoiding that after the AP sends the SBP termination frame, the AP needs to send the sensing measurement termination frame again to terminate the TB sensing measurement procedure in which the U-STA participates, to reduce the signaling waste.

In some embodiments, in a case that the first frame includes the sensing measurement termination frame, the AP does not send a sensing measurement result of the measurement session after sending the first frame to the U-STA within the availability window pre-negotiated with the SBP initiator.

In a case that the SBP initiator receives the sensing measurement termination frame within the availability window and does not receive an SBP report fed back by the SBP responder (AP) before change of the BSS parameters, the SBP initiator already terminates the TB sensing measurement procedure. The AP does not report the SBP report, the SBP is not completed, and the SBP responder does not need to send the sensing measurement result of the measurement session.

In some embodiments, the first frame includes second identification information, and a reason for identifying that the AP terminates the SBP procedure or the TB sensing measurement procedure include whether the parameters of the BSS where the AP is located change.

The sensing measurement termination frame may carry the reason of termination, such that the SBP initiator may monitor the beacon frame rebroadcast by the AP(SBP responder). A format of the sensing measurement termination frame is illustrated in Table 3 below.

**Table 3**

| Information content | Category | Public Action/Protected Dual of Public Action | Measurement Session ID Indication | Measurement Termination Control |
|---|---|---|---|---|
| Octets | 1 | 1 | 1 | 1 |

In some embodiments, the first frame includes the sensing measurement termination frame, and the second identification information is carried in a measurement session termination control field of the sensing measurement termination frame.

As illustrated in Table 3, the second identification information is carried in a measurement termination control field of the SBP termination frame.

Further, a format of the measurement termination control field is illustrated in Table 4 below.

**Table 4**

| Content | Terminate All TB Measurement Sessions | Terminate All non-TB Measurement Sessions | TB/non-TB Measurement Session Type | Reserved |
|---|---|---|---|---|
| Bits | 1 | 1 | | 6 |

The second identification information may be carried in the reserved field, that is, a bit is newly occupied in the reserved field.

In some embodiments, names of information and the like are not limited to those recited in the embodiments. Terms such as "information", "message", "signal", "signaling", "report", "configuration", "indication", "instruction", "command", "channel", "parameter", "domain", "field", "symbol", "codepoint", "bit", "data", "program", and "chip" may be used interchangeably.

In some embodiments, terms such as "moment", "time point", "time", and "time position" may be used interchangeably, while terms like "duration", "time period", "time window", "window", and "time" may be also used interchangeably.

In some embodiments, terms such as wireless access scheme and waveform may be used interchangeably.

In some embodiments, terms such as "certain", "predetermined", "preset", "set", "indicated", "certain", "any", "first", and others may be used interchangeably. Terms such as "certain A", "predetermined A", "preset A", "set A", "indicated A", "certain A", "any A", and "first A" may be interpreted as A predefined in protocols, as A obtained by setting, configuration, or indication, or as specific A, certain A, any A, or first A, but are not limited thereto.

In some embodiments, the judgment or determination may be made by a value (0 or 1) represented by 1 bit, a true or false value (boolean) represented by true or false, and or a comparison of numerical values (such as, comparison with a predetermined value), but is not limited to this.

In some embodiments, "not expecting to receive" may be interpreted as not receiving on time domain resources and/or frequency domain resources, or may also be interpreted as not performing subsequent processing on data and the like after receiving the data; and "not expecting to send" may be interpreted as not sending, or may also be interpreted as sending but not expecting the receiver to respond to the sent content.

The communication method related to the embodiments of the disclosure may include at least one of the above steps and embodiments. For example, step 201 may be implemented as an independent embodiment, step 202 may be implemented as an independent embodiment, step 203 may be implemented as an independent embodiment, step 301 may be implemented as an independent embodiment, step 302 may be implemented as an independent embodiment and step 303 may be implemented as an independent embodiment. A combination of step 201 and step 202 may be implemented as an independent embodiment, a combination of step 301 and step 302 may be implemented as an independent embodiment, a combination of step 202 and step 203 may be implemented as an independent embodiment, and a combination of step 302 and step 303 may be implemented as an independent embodiment, but is not limited to this.

In some embodiments, please refer to other alternative implementations described before or after the corresponding specifications in FIG. 2 and FIG. 3.

FIG. 4 is a flow chart illustrating a communication method according to an embodiment of the disclosure.

As illustrated in FIG. 4, the communication method may be applied to an AP. The communication method includes the following.

At step 401, a first frame is determined by the AP in a case that BSS parameters of a BSS where the AP is located change; the first frame identifies that the AP terminates an SBP procedure or terminates a TB sensing measurement procedure, and the first frame includes a measurement session ID of a measurement session terminated.

At step 402, the first frame is sent to a U-STA.

Alternatively, in embodiments of the disclosure, sending the first frame to the U-STA includes:

sending the first frame to the U-STA within an availability window pre-negotiated with an SBP initiator.

Alternatively, in embodiments of the disclosure, before determining the first frame, the communication method includes:

receiving an SBP request frame sent by the U-STA in establishing the SBP procedure with the U-STA, in which the SBP request frame identifies that the U-STA participates in a TB sensing measurement, and the SBP request frame includes availability window information.

Alternatively, in some embodiments, the first frame includes an SBP termination frame or a sensing measurement termination frame.

Alternatively, in some embodiments, the first frame includes the sensing measurement termination frame, and the AP does not send a sensing measurement result of the measurement session after sending the first frame to the U-STA within the availability window.

Alternatively, in some embodiments, the first frame includes the SBP termination frame, and the AP sends a sensing measurement result of the measurement session to the SBP initiator before sending the first frame to the U-STA within the availability window.

Alternatively, in some embodiments, the first frame includes second identification information, and a reason for the second identification information identifying that the AP terminates the SBP procedure or the TB sensing measurement procedure includes: whether the parameters of the BSS where the AP is located change.

Alternatively, in some embodiments, the first frame includes the SBP termination frame, and the second identification information is carried in an SBP termination control field of the SBP termination frame;
or
the first frame includes the sensing measurement termination frame, and the second identification information is carried in a measurement session termination control field of the sensing measurement termination frame.

The communication method related to the embodiments of the disclosure may include at least one of the above steps and embodiments. For example, step 401 may be implemented as an independent embodiment, and step 402 may be implemented as an independent embodiment; and a combination of step 401 and step 402 may be implemented as an independent embodiment, but is not limited to this.

In some embodiments, please refer to other alternative implementations described before or after the specification corresponding to FIG. 4.

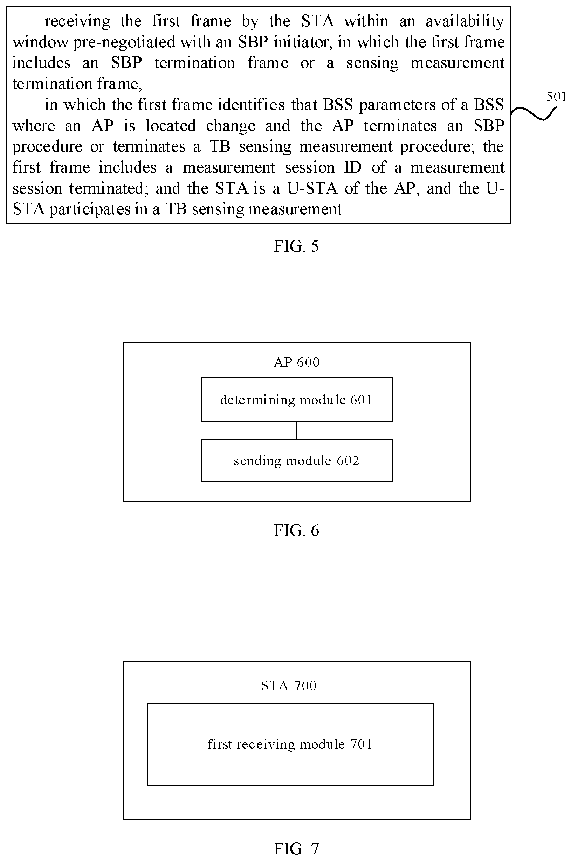

FIG. 5 is a second flow chart illustrating a communication method according to an embodiment of the disclosure.

As illustrated in FIG. 5, the communication method is applied to a STA, including the following.

At step 501, a first frame is received.

The first frame identifying that BSS parameters of a BSS where an AP is located change and the AP terminates an SBP procedure or terminates a TB sensing measurement procedure; the first frame includes a measurement session ID of a measurement session terminated; and the STA is a U-STA of the AP, and the U-STA participates in a TB sensing measurement.

Alternatively, in some embodiments, receiving the first frame by the STA includes: receiving, by the STA, the first frame within an availability window pre-negotiated with an SBP initiator.

Alternatively, in some embodiments, the first frame incudes an SBP termination frame or a sensing measurement termination frame.

Alternatively, in some embodiments, before receiving the first frame, the communication method includes:
sending an SBP request frame to the AP in establishing the SBP procedure with the AP, in which the SBP request frame identifies that the U-STA participates in the TB sensing measurement, and the SBP request frame includes availability window information.

Alternatively, in some embodiments, the first frame includes the sensing measurement termination frame, and the AP does not send a sensing measurement result of the measurement session after sending the first frame to the U-STA within the availability window.

Alternatively, in some embodiments, the first frame includes the SBP termination frame, and the STA receives a sensing measurement result of the measurement session from the AP before receiving the first frame within the availability window pre-negotiated with the SBP initiator.

Alternatively, in some embodiments, the first frame includes second identification information, and a reason for the second identification information identifying that the AP terminates the SBP procedure or the TB sensing measurement procedure includes whether the parameters of the BSS where the AP is located change.

Alternatively, in some embodiments, the first frame includes the SBP termination frame, and the second identification information is carried in an SBP termination control field of the SBP termination frame;
or
the first frame includes the sensing measurement termination frame, and the second identification information is carried in a measurement session termination control field of the sensing measurement termination frame.

Embodiments of the disclosure also provide an apparatus for implementing any one of the above methods. For example, an apparatus is provided, including units or modules for implementing the steps performed by the terminal in any one of the above methods. For another example, another apparatus is provided, including units or modules for implementing steps performed by the network device (such as, an access network device, a core network function node, a core network device, etc.) in any one of the above methods.

It should be understood that the division of units or modules in the above apparatus is merely a division of logical functions. In actual implementations, the units may be fully or partially integrated into a single physical entity or may be physically separated. In addition, the units or modules in the apparatus may be implemented in the form of a processor calling software. For example, the apparatus includes a processor, the processor is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be implemented via a design of the hardware circuit. The hardware circuit may be understood as one or more processors. For example, in an implementation, the hardware circuit is an application-specific integrated circuit (ASIC). Functions of some or all of the units are implemented by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to implement the functions of some or all of the units or modules. All units or modules of the above apparatus may be fully implemented in the form of the processor calling software, or fully implemented in the form of the hardware circuit, or partially implemented in the form of the processor calling software and the remaining part implemented in the form of the hardware circuit.

In embodiments of the disclosure, the processor is a circuit with a signal processing capability. In an implementation, the processor may be a circuit with a capability of reading and running instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, the processor is a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 6 is a block diagram illustrating an AP according to an embodiment of the disclosure. As illustrated in FIG. 6, the AP 600 may include at least one of: a determining module 601 or a sending module 602.

In some embodiments, the determining module 601 is configured to determine a first frame in a case that BSS parameters of a BSS where the AP is located change; the first frame identifying that the AP terminates an SBP procedure or terminates a TB sensing measurement procedure, and the first frame including a measurement session ID of a measurement session terminated.

The sending module 602 is configured to send the first frame to a U-STA.

Alternatively, the determining module 601 is configured to perform at least one of the communication steps (such as step 202, step 302 and step 401, but not limited thereto) performed by the AP in any of the above methods, which is not repeated here. The sending module 602 is configured to perform at least one of step 203, step 303 and step 402, which is not repeated here.

FIG. 7 is a block diagram illustrating an STA according to an embodiment of the disclosure. As illustrated in FIG. 7, the STA 700 may include a first receiving module 701.

In some embodiments, the first receiving module 701 is configured to receive a first frame within an availability window pre-negotiated with an SBP initiator. The first frame includes an SBP termination frame or a sensing measurement termination frame.

The first frame identifies that BSS parameters of a BSS where an AP is located change and the AP terminates an SBP procedure or terminates a TB sensing measurement procedure; the first frame includes a measurement session ID of a measurement session terminated.

The STA is a U-STA of the AP, and the U-STA participates in a TB sensing measurement.

Alternatively, the first receiving module 701 is configured to perform the communication steps (such as step 201, step 301, step 501, but not limited thereto) performed by the STA 101 in any of the above methods, which is not repeated here.

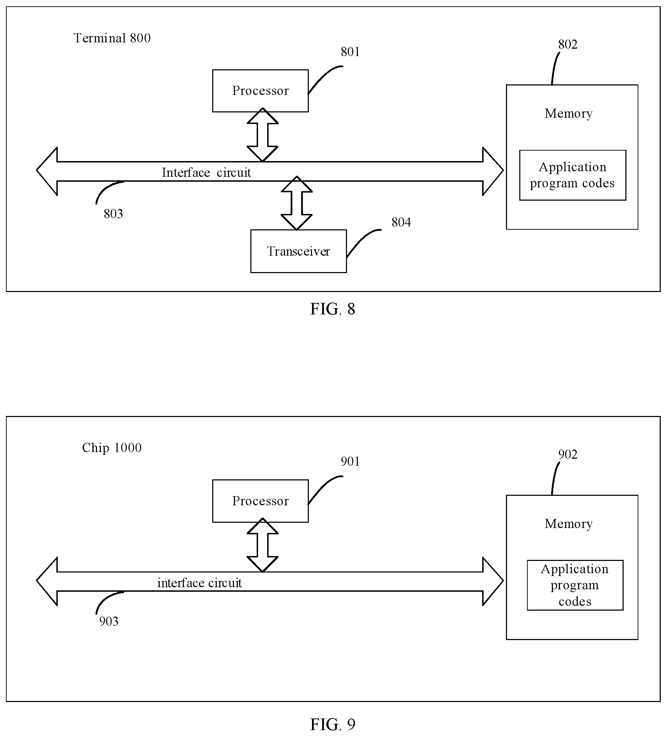

FIG. 8 is a block diagram illustrating a terminal 800 (such as user equipment) according to an embodiment of the disclosure. The terminal 800 may be a chip, a chip system, or a processor, etc., that supports the network device to implement any one of the above methods, or a chip, a chip system, or a processor, etc., that supports the terminal to implement any one of the above methods. The terminal 800 may be configured to implement the method in the above method embodiments. For details, please refer to the description in the above method embodiments.

As illustrated in FIG. 8, the terminal 800 may include one or more processors 801. The processor 801may be a general-purpose processor or a special-purpose processor, such as a baseband processor or a central processing unit. The baseband processor may be configured to process communication protocols and communication data, and the central processing unit may be configured to control the communication device (such as a base station, a baseband chip, a terminal, a terminal chip, a distributed unit (DU) or a central unit (CU), etc.) to perform computer programs and process computer program data. The terminal 800 is configured to perform any one of the above methods.

In some embodiments, the terminal 800 also includes one or more memories 802 for storing instructions. Alternatively, all or some of the memory 802 may be located outside the terminal 800.

In some embodiments, the terminal 800 also includes one or more transceivers 804. In a case that the terminal 800 includes one or more transceivers 804, the transceiver 804 perform at least one of the communication steps (such as step 202, step 301, step 303, step 401, step 402, step 404, step 501, but not limited thereto) in the above method, and the processor 801 performs at least one of other steps (such as step 201, step 302, step 403, step 502, step 601, but not limited thereto)

In some embodiments, the transceiver may include a receiver and a transmitter, which may be separate or integrated together. Alternatively, the terms such as transceiver, transceiving unit, transceiving machine, and transceiving circuit, etc., may be used interchangeably; the terms such as transmitter, transmitting unit, transmitting machine, and transmitting circuit, etc., may be used interchangeably; and the terms such as receiver, receiving unit, receiving machine, and receiving circuit, etc., may be used interchangeably.

In some embodiments, the terminal 800 also includes one or more interface circuits 803. The interface circuit 803 is connected to the memory 802. The interface circuit 803 may be configured to receive signals from the memory 802 or other devices, and may be configured to send signals to the memory 802 or other devices. For example, the interface circuit 803 may read instructions stored in the memory 802 and send the instructions to the processor 801.

The terminal 800 in the description of the above embodiments may be a communication device such as a terminal, but the scope of the terminal 800 described in embodiments of the disclosure is not limited herein, and the structure of the terminal 800 may not be limited by FIG. 8. The communication device may be a stand-alone device or may be a part of a larger device. For example, the communication device may be: (1) a stand-alone IC, a chip, a chip system or a subsystem; (2) a collection of ICs including one or more ICs, alternatively, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 9 is a block diagram illustrating a chip 900 according to an embodiment of the disclosure. For a case where the terminal 800 may be a chip or a chip system, please refer to the block diagram of the chip 900 illustrated in FIG. 9, which is not limited herein.

The chip 900 includes one or more processors 901. The chip 900 is configured to perform any one of the above methods.

In some embodiments, the chip 900 also includes one or more interface circuits 903. Alternatively, the interface circuit 903 is connected to the memory 902. The interface circuit 903 may be configured to receive data from the memory 902 or other devices, and the interface circuit 903 may be configured to send data to the memory 902 or other devices. For example, the interface circuit 903 may read data stored in the memory 902 and send the data to the processor 901.

In some embodiments, the interface circuit 903 performs at least one of the communication steps such as sending and/or receiving steps (such as step 202, step 301, step 303, step 401, step 402, step 404 and step 501, but not limited thereto), and the processor 901 performs at least one of other steps (such as step 201, step 302, step 403, step 502 and step 601, but not limited thereto).

In some embodiments, the terms such as interface circuit, interface, transceiver pin, transceiver, etc., may be used interchangeably.

In some embodiments, the chip 900 also includes one or more memories 902 for storing instructions. Alternatively, all or some of the memories 902 may be located outside of the chip 900.

The disclosure also provides a storage medium for storing instructions. When the instructions are run on the terminal 800, the terminal 800 is caused to perform any one of the above methods. Alternatively, the storage medium is an electronic storage medium. Alternatively, the storage medium is a computer-readable storage medium, but is not limited herein, and may also be a storage medium readable by other devices. Alternatively, the storage medium may be a non-transitory storage medium, but is not limited herein, and may also be a transitory storage medium.

The disclosure also provides a program product. When the program product is performed by the terminal 800, the terminal 800 is caused to perform any one of the above methods. Alternatively, the program product is a computer program product.

The disclosure also provides a computer program. When the computer program is run on a computer, the computer is caused to perform any one of the above methods.

## Claims

1. A communication method, comprising:
determining a first frame by an access point (AP) in a case that basic service set (BSS) parameters of a BSS where the AP is located change; the first frame identifying that the AP terminates a sensing by proxy (SBP) procedure or terminates a triggered based sounding (TB) sensing measurement procedure, and the first frame comprising a measurement session identification (ID) of a measurement session terminated; and
sending the first frame to an unassociated station (U-STA).

2. The communication method of claim 1, wherein sending the first frame to the U-STA comprises:
sending the first frame to the U-STA within an availability window pre-negotiated with an SBP initiator.

3. The communication method of claim 1 or 2, before determining the first frame, further comprising:
receiving an SBP request frame sent by the U-STA in establishing the SBP procedure with the U-STA, wherein the SBP request frame identifies that the U-STA participates in a TB sensing measurement, and the SBP request frame comprises availability window information.

4. The communication method of claim 3, wherein the first frame comprises an SBP termination frame or a sensing measurement termination frame.

5. The communication method of claim 4, wherein the first frame comprises the sensing measurement termination frame, and the AP does not send a sensing measurement result of the measurement session after sending the first frame to the U-STA within the availability window.

6. The communication method of claim 4, wherein the first frame comprises the SBP termination frame, and the AP sends a sensing measurement result of the measurement session to the SBP initiator before sending the first frame to the U-STA within the availability window.

7. The communication method of claim 4, wherein the first frame comprises second identification information, and a reason for the second identification information identifying that the AP terminates the SBP procedure or the TB sensing measurement procedure comprises whether the parameters of the BSS where the AP is located change.

8. The communication method of claim 7, wherein the first frame comprises the SBP termination frame, and the second identification information is carried in an SBP termination control field of the SBP termination frame;
or
the first frame comprises the sensing measurement termination frame, and the second identification information is carried in a measurement session termination control field of the sensing measurement termination frame.

9. A communication method, comprising:
receiving a first frame by a station (STA),
wherein the first frame identifying that basic service set (BSS) parameters of a BSS where an access appoint (AP) is located change and the AP terminates a sensing by proxy (SBP) procedure or terminates a triggered based sounding (TB) sensing measurement procedure; the first frame comprises a measurement session identification (ID) of a measurement session terminated; and the STA is an unassociated station (U-STA) of the AP, and the U-STA participates in a TB sensing measurement.

10. The communication method of claim 9, wherein receiving the first frame by the STA comprises:
receiving, by the STA, the first frame within an availability window pre-negotiated with an SBP initiator.

11. The communication method of claim 9 or 10, wherein the first frame comprises an SBP termination frame or a sensing measurement termination frame.

12. The communication method of claim 11, before receiving the first frame, further comprising:
sending an SBP request frame to the AP in establishing the SBP procedure with the AP, wherein the SBP request frame identifies that the U-STA participates in the TB sensing measurement, and the SBP request frame comprises availability window information.

13. The communication method of claim 11 or 12, wherein the first frame comprises the sensing measurement termination frame, and the AP does not send a sensing measurement result of the measurement session after sending the first frame to the U-STA within the availability window.

14. The communication method of claim 11 or 12, wherein the first frame comprises the SBP termination frame, and the STA receives a sensing measurement result of the measurement session from the AP before receiving the first frame within the availability window pre-negotiated with the SBP initiator.

15. The communication method of claim 11 or 12, wherein the first frame comprises second identification information, and a reason for the second identification information identifying that the AP terminates the SBP procedure or the TB sensing measurement procedure comprises whether the parameters of the BSS where the AP is located change.

16. The communication method of claim 15, wherein the first frame comprises the SBP termination frame, and the second identification information is carried in an SBP termination control field of the SBP termination frame;
or
the first frame comprises the sensing measurement termination frame, and the second identification information is carried in a measurement session termination control field of the sensing measurement termination frame.

17. An access point (AP), comprising:
a determining module, configured to determine a first frame in a case that basic service set (BSS) parameters of a BSS where the AP is located change; the first frame identifying that the AP terminates a sensing by proxy (SBP) procedure or terminates a triggered based sounding (TB) sensing measurement procedure, and the first frame comprising a measurement session identification (ID) of a measurement session terminated; and
a sending module, configured to send the first frame to an unassociated station (U-STA).

18. A station (STA), comprising:
a first receiving module, configured to receive a first frame,
wherein the first frame identifying that basic service set (BSS) parameters of a BSS where an access appoint (AP) is located change and the AP terminates a sensing by proxy (SBP) procedure or terminates a triggered based sounding (TB) sensing measurement procedure; the first frame comprises a measurement session identification (ID) of a measurement session terminated; and
the STA is an unassociated station (U-STA) of the AP, and the U-STA participates in a TB sensing measurement.

19. An access point (AP), comprising:
one or more processors;
wherein the AP is configured to perform the communication method of any one of claims 1 to 8.

20. A station (STA), comprising:
one or more processors;
wherein the STA is configured to perform the communication method of any one of claims 9 to 16.

21. A communication system, comprising an access point (AP) and a station (STA), wherein the AP is configured to implement the communication method of any one of claims 1 to 8, and the STA is configured to implement the communication method of any one of claims 9 to 16.

22. A storage medium for storing instructions, wherein when the instructions are run on a communication device, the communication device is caused to perform the communication method of any one of claims 1 to 8 or the communication method of any one of claims 9 to 16.
